# EUROPÄISCHE PATENTSCHRIFT

(11) **EP 2 036 470 B1**
(45) Veröffentlichungstag und Bekanntmachung des Hinweises auf die Patenterteilung: **16.06.2010**
(21) Anmeldenummer: 08014750.7
(22) Anmeldetag: 20.08.2008
(51) Int. Cl.: A47J 31/44

(54) **Getränkebereiter mit Füllstandsensor**
Drink preparer with fill level sensor
Préparateur de boissons doté d'un capteur du niveau de remplissage

(30) Priorität: 24.08.2007 DE 102007040309
(43) Veröffentlichungstag der Anmeldung: 18.03.2009
(73) Patentinhaber: Miele & Cie. KG, 33332 Gütersloh (DE)
(72) Erfinder: Giezendanner, Stefan, 9054 Haslen (CH); Müller, Thomas, 8590 Romanshorn (CH); Stahl, Matthias, 33758 Schloss Holte-Stukenbrock (DE)

(56) Entgegenhaltungen:
- EP-A- 0 472 272
- WO-A-2008/077264
- US-A1- 2005 230 343

## Beschreibung

Die Erfindung betrifft einen Getränkebereiter zur Zubereitung von Getränken, z. B. Kaffeeautomat, mit einem Gerät, mit einem Behälter und zumindest einer Leitung zum Ansaugen einer Flüssigkeit aus dem Behälter in das Gerät, wobei die Leitung zumindest aus einem Abschnitt der Leitung im Behälter und einem Abschnitt der Leitung im Gerät besteht und wobei der Getränkebereiter geeignet und eingerichtet ist, dass der Behälter in dem Gerät eingesetzt und aus diesem entnommen werden kann, wobei der Behälter einen Sensor zum Messen eines Füllstands der Flüssigkeit in dem Behälter aufweist und der Getränkebereiter zur automatischen Kupplung des Abschnitts der Leitung im Behälter mit dem Abschnitt der Leitung im Gerät ausgebildet ist.

Ein derartiger Getränkebereiter ist aus der US 2005/230343 A1 für die Zubereitung von Babynahrung bekannt. Das Gerät weist einen Behälter auf, aus dem Flüssigkeit über eine Leitung entnommen werden kann. Beim Einsetzen wird der Behälter über eine Kupplung mit der Leitung verbunden.

Der Behälter ist außerdem mit einer Anzeigeeinrichtung für den Füllstand im Behälter ausgebildet.

Aus der Druckschrift mit der Veröffentlichungsnummer DE 10 2005 048 164 A1 und aus der Druckschrift mit der Veröffentlichungsnummer EP 1 483 991 B1 sind Getränkebereiter, nämlich Kaffeeautomaten, bekannt.

Bei den aus dem Stand der Technik bekannten Getränkebereitern wird die Milch entweder in einer Verkaufsverpackung neben den Getränkebereiter gestellt und eine Leitung in die Verkaufsverpackung gelegt. Die Verkaufsverpackung bildet dann einen Behälter, der jedoch nicht Teil des Getränkebereiters ist. Andere Getränkebereiter weisen einen eigenen Behälter auf, der ebenfalls mit einer Leitung verbunden wird.

Während des Betriebs des Getränkebereiters wird die Milch über die Leitungen aus den Behältern gesaugt. Die Milch wird über die Leitung Zubereitungsmitteln in dem Getränkebereiter zugeführt, die die Milch auf die gewünschte Art und Weise zubereiten, zum Beispiel Erhitzen und/oder Aufschäumen.

Bei den bekannten Getränkebereitern wird die Milch solange aus dem Behälter gefördert, wie Milch in dem Behälter vorhanden ist. Eine automatische Kontrolle des noch vorhandenen Milchvorrats erfolgt nicht. Vielmehr muss der Benutzer manuell kontrollieren, ob noch ausreichend Milch in den Behältern vorhanden ist. In vielen Fällen wäre es hilfreich, wenn der Getränkebereiter automatisch den Milchvorrat überwacht und bei einem nahenden Ende des Milchvorrats eine Warnung ausgibt, welche den Benutzer auffordert, den Milchvorrat aufzufüllen.

Hier setzt die vorliegende Erfindung an.

Der vorliegenden Erfindung liegt die Aufgabe zugrunde, einen Getränkebereiter der eingangs beschriebenen Art so fortzubilden, dass eine automatische Überwachung des Flüssigkeitsvorrats in dem Behälter möglich ist.

Diese Aufgabe wird erfindungsgemäß und wie in Anspruch / definiert dadurch gelöst, dass der Getränkebereiter einen Sensor zum Messen des Füllstands der Flüssigkeit in dem Behälter umfasst.

Der Sensor eines erfindungsgemäßen Getränkebereiters umfasst einen Stab, der in den Behälter hineinreicht. Der Behälter kann einen Deckel umfassen, und der Deckel kann den Sensorstab umfassen.

Bei dem Sensor kann es sich um einen kapazitiven Füllstandssensor handeln.

Ein erfindungsgemäßer Getränkebereiter kann so ausgestaltet sein, dass an dem Deckel zumindest Abschnitte der Leitungen angebracht sind. Gemäß der Erfindung kann der Getränkebereiter ein Aufnahmeteil aufweisen, in welches der Behälter entnehmbar eingesetzt ist. Der Abschnitt der Leitung im Deckel und der Sensor sind mit einem Abschnitt der Leitung im Gerät beziehungsweise einer Sensorleitung im Gerät gekuppelt. Die Kupplung des Abschnitts der Leitung in dem Behälter und des Abschnitts der Leitung am Aufnahmeteil beziehungsweise im Gerät einerseits und die Kupplung des Sensorstabs und der Sensorleitung andererseits sind räumlich voneinander getrennt, so dass eine Undichtigkeit an der Kupplungsstelle der Abschnitte der Leitungen nicht zu Störungen an der Kupplungsstelle des Sensors mit der Sensorleitung führen kann. Die Kupplung der Leitungen einerseits und der Sensorleitung mit dem Sensor andererseits erfolgt vorzugsweise auf gegenüberliegenden Seiten des Deckels beziehungsweise des Aufnahmeteils.

Die Kupplung kann beispielsweise an einander gegenüberliegenden Seiten einer Aufnahmeausnehmung in dem Aufnahmeteil erfolgen, wobei die Aufnahmeausnehmung dazu gedacht ist, den Behälter im Betrieb des Getränkebereiters aufzunehmen.

Ein erfindungsgemäßes Beispiel für einen Getränkebereiter zur Zubereitung von Getränken ist anhand der Figuren näher erläutert. Es zeigt:

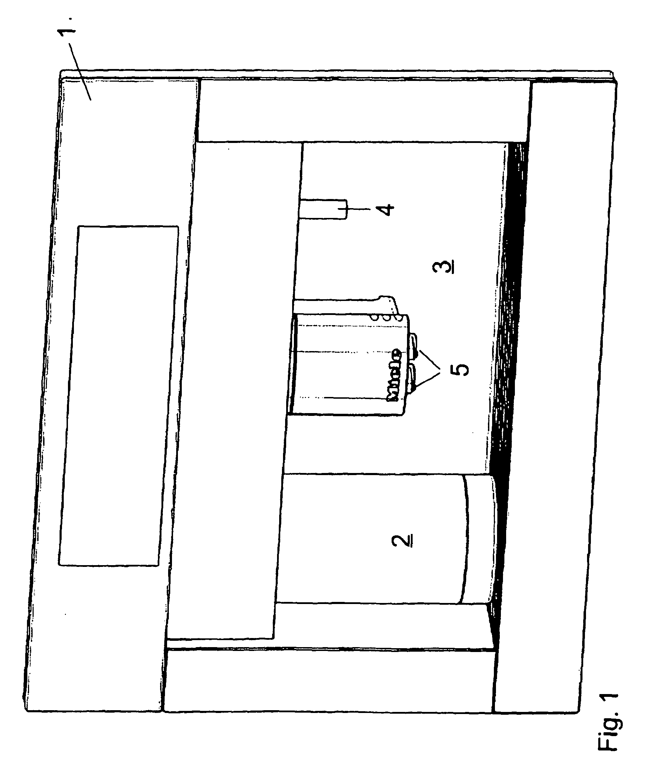

Fig. 1 eine Frontansicht einer Tür des erfindungsgemäßen Getränkebereiters,
Fig. 2 eine Rückansicht der Tür des erfindungsgemäßen Getränkebereiters,
Fig. 3 eine perspektivische Darstellung eines Behälters des Getränkebereiters,
Fig. 4 eine Explosionsdarstellung des Behälters,
Fig. 5 eine perspektivische Ansicht eines Deckels des Behälters,
Fig. 6 eine Explosionsdarstellung des Deckels,
Fig. 7 je einen Abschnitt von zwei Leitungen des Getränkebereiters,
Fig. 8 die Enden der Leitungen in einer Explosionsdarstellung,
Fig. 9 eine perspektivische Ansicht des in eine Aufnahmeausnehmung eingesetzten Behälters unter Vernachlässigung wesentlicher Teile des Deckels des Behälters,
Fig. 10 eine Darstellung entsprechend Fig. 9 jedoch mit nicht gekuppelten Leitungen und Sensor/Sensorleitung,
Fig. 11 eine weitere Darstellung entsprechend Fig. 9, jedoch mit gekuppelten Leitungen und gekuppelten Sensor und Sensorleitung.

Der erfindungsgemäße Getränkebereiter umfasst ein Gerät, in welchem die Getränke zubereitet werden, und das als Standgerät oder als Einbaugerät ausgestaltet sein kann. Das Gerät weist ein Gehäuse auf, in dem verschiedene Komponenten des Geräts untergebracht sind. Das Gehäuse umfasst eine Tür 1, die auf der Frontseite des Geräts vorgesehen ist, und die zu Wartungszwecken und zum Zwecke des Nachfüllens von verschiedenen Getränkezutaten geöffnet werden kann. Weitere Teile des Gehäuses oder in dem Gehäuse angeordneter Komponenten des Geräts sind in den Figuren nicht dargestellt.

Neben dem Gerät umfasst der Getränkebereiter einen als Milchbehälter ausgebildeten Behälter 2, der während des Betriebs des Getränkebereiters in das Gerät beziehungsweise in die Tür 1 des Geräts eingesetzt ist. Aus dem Milchbehälter 2 wird, sofern ein Getränk aus Milch oder ein Getränk das Milch enthält zubereitet werden soll, Milch entnommen.

Die Getränke werden in einem Ausgabebereich 3 abgezapft, wofür der Getränkebereiter verschiedene Ausgabedüsen 4, 5 aufweist. Der Ausgabebereich 3 ist in einer Nische der Tür 1 vorgesehen, in welche die verschiedenen Ausgabedüsen 4, 5 deckenseitig einmünden.

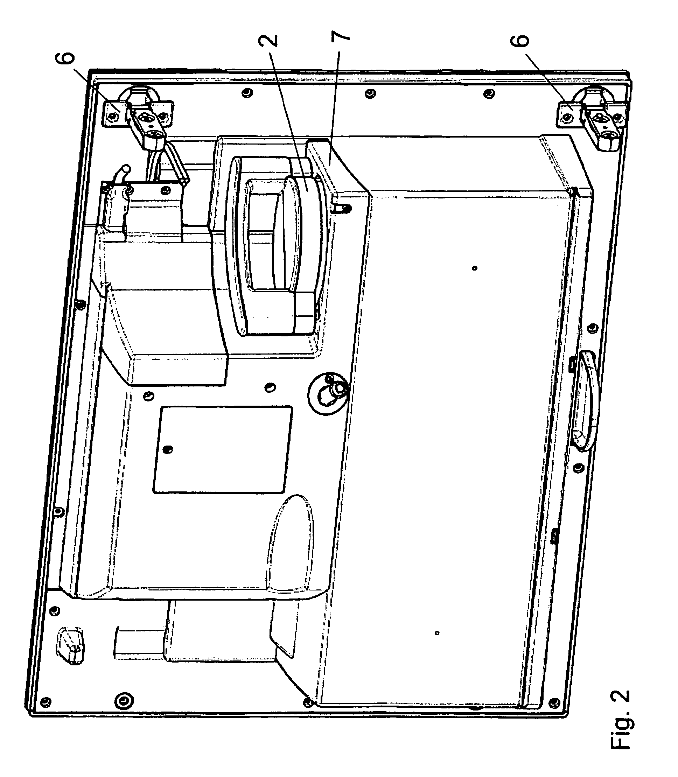

Die Tür 1 ist über Scharniere 6 mit dem übrigen Gehäuse verbunden (Fig. 2).

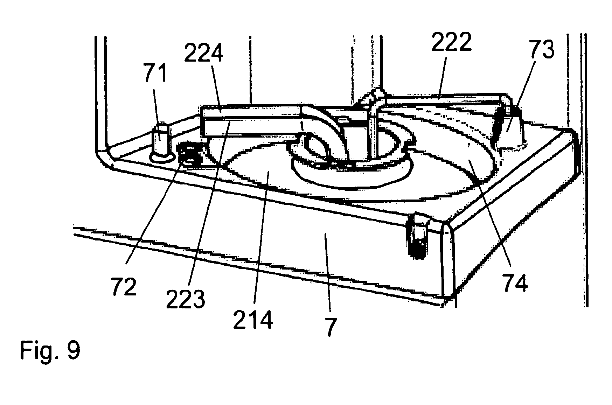

Auf der Innenseite der Tür 1 ist ein Aufnahmeteil 7 vorgesehen, in welchem eine Aufnahmeausnehmung 74 vorgesehen ist. Diese Aufnahmeausnehmung 74 (Fig. 9, 10, 11) ist als Durchgangsloch ausgestaltet und mündet deckenseitig in der Nische des Ausgabebereichs 3 auf der Frontseite der Tür 1.

In die Aufnahmeausnehmung ist der Milchbehälter 2 eingesetzt. Der Milchbehälter 2 durchgreift die Aufnahmeausnehmung 74 und ragt in die Nische des Ausgabebereichs 3 hinein. Ein Teil des Milchbehälters 2 ist daher von außen erkennbar.

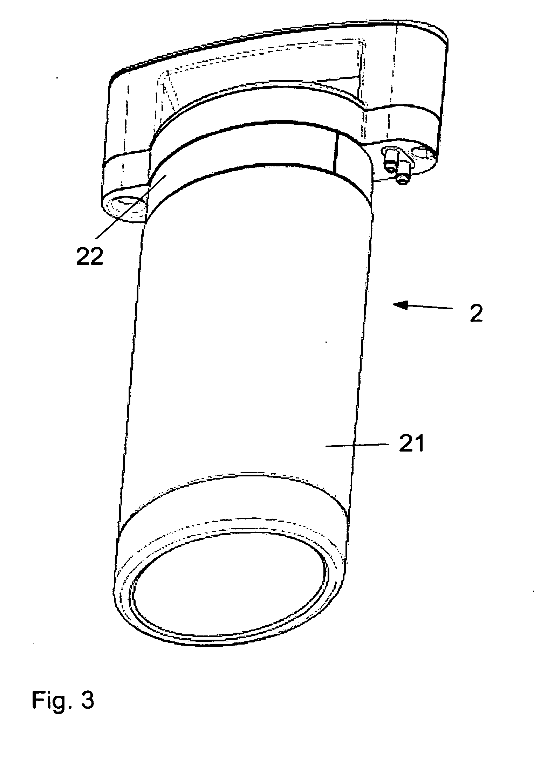

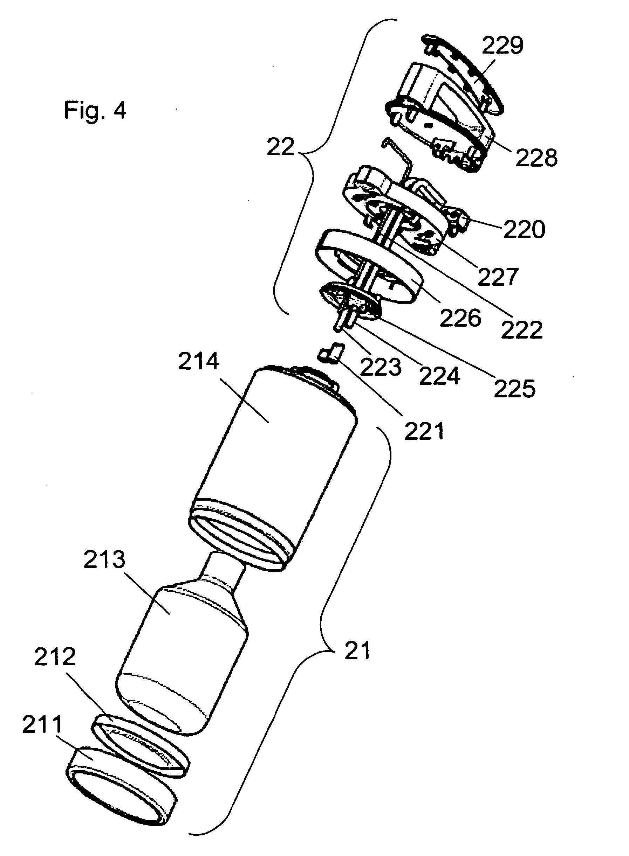

Der Milchbehälter (Fig. 3 und 4) umfasst ein Isoliergefäß 21 und einen Deckel 22. Das Isoliergefäß 21 ist aus einem ersten Bodenteil 211, einem zweiten Bodenteil 212, einem Innengefäß 213 und einem Außengefäß 214 zusammengesetzt. Das erste Bodenteil 211 und das zweite Bodenteil 212 sind ringförmig ausgebildet. Das zweite Bodenteil 212 kann in das erste Bodenteil 211 eingesetzt werden. Das Innengefäß 213 ruht auf dem zweiten Bodenteil 212, während das Außengefäß 214 auf dem Fachmann bekannte Weise mit dem ersten Bodenteil 211 verbunden ist. Das Außengefäß 214 haust das Innengefäß 213 ein, so dass das Innengefäß 213 durch das Außengefäß 214 gegen Beschädigungen geschützt ist.

Bei abgenommenem Deckel 22 kann in das Isoliergefäß 21 Milch eingefüllt werden. Nach dem Einfüllen wird dann das Isoliergefäß 21 mit dem Deckel 22 verschlossen, wozu ein Verschlussmechanismus genutzt wird, der nicht näher beschrieben wird.

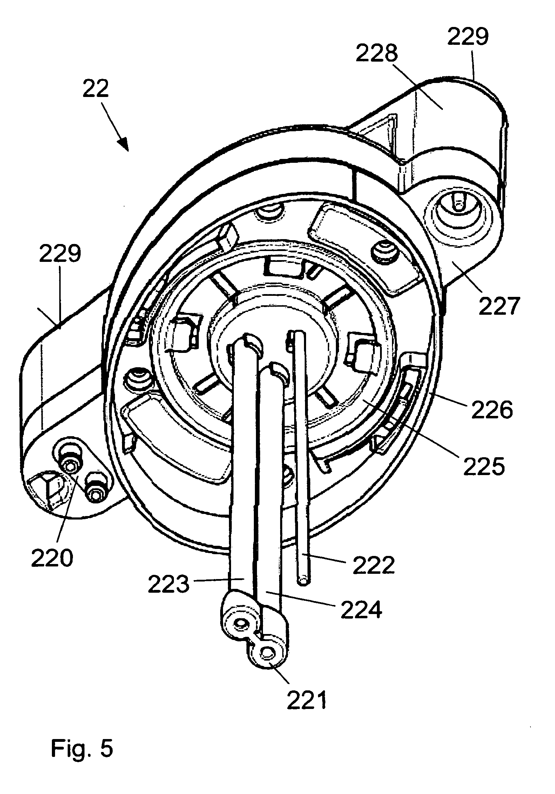

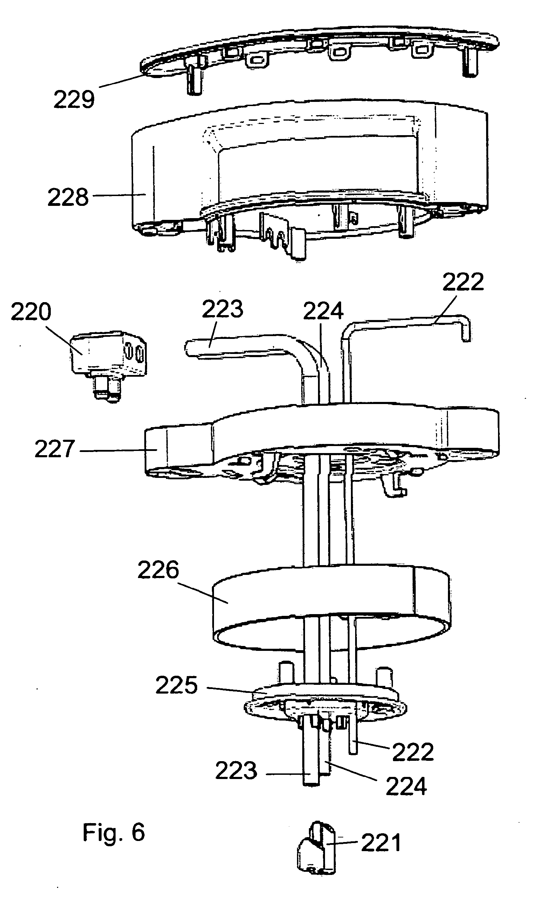

Der Deckel (Fig. 4, Fig. 5 und Fig. 6) umfasst als Teile des Mechanismus zur Verbindung mit dem Isoliergefäß 21 ein erstes Verriegelungsteil 225, ein zweites Verriegelungsteil 226 und ein drittes Verriegelungsteil 227, die zum Teil gegeneinander schwenkbar auf nicht näher erläuterte Art und Weise miteinander verbunden sind. Auf dem dritten Verriegelungsteil 227 ist ein Bügelteil 228 aufgesetzt, das mit einem Abdeckungsteil 229 verbunden ist. An dem Bügelteil 228 ist ein Handgriff ausgebildet, an welchem der Milchbehälter 2 zum Transport ergriffen werden kann.

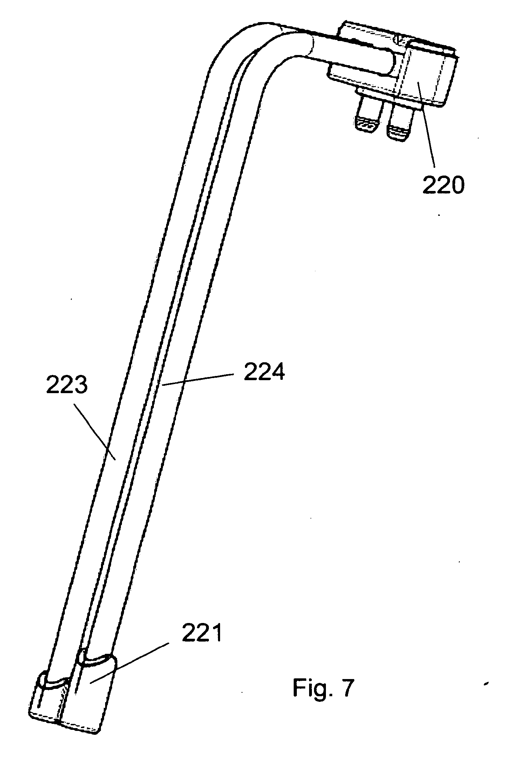

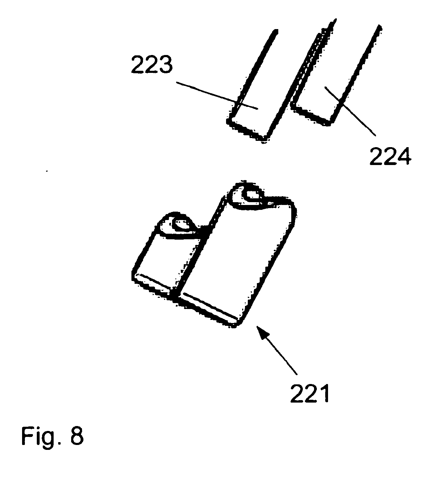

Durch das erste Verriegelungsteil 225, das zweite Verriegelungsteil 226 und das dritte Verriegelungsteil 227 ist jeweils ein Abschnitt 220, 221, 223, 224 von zwei Milchleitungen hindurchgeführt. Über die Milchleitungen kann dem Milchbehälter 2 Milch entnommen und dem Gerät zugeführt werden. Die Abschnitte 220, 221, 223, 224 der Milchleitungen (Fig. 7, Fig. 8) weisen zwei L-förmig gebogene Rohre 223, 224, zwei Endteile 221 und ein Kupplungsmittel 220 auf. Die Endteile 221 sind miteinander fest verbunden und als ein Kunststoffspritzteil hergestellt. Die Endteile 221 sind an den Enden der längeren Schenkel der Rohre 223, 224 angebracht.

Die längeren Schenkel der Rohre 223, 224 sind ungleich lang. Der längere Schenkel des ersten Rohres 223 ist nämlich länger als der längere Schenkel des zweiten Rohres 224.

Die Endteile 221 sind komplementär zu den Enden der Rohre 223, 224 ausgebildet. Das Endteil, welches dem ersten Rohr 223 zugeordnet ist, ist kürzer als das Endteil, welches dem zweiten Rohr 224 zugeordnet ist. Damit ist sichergestellt, dass die beiden Rohre 223, 224 mit dem jeweils ihnen zugeordneten Endteil 221 verbunden sind. Dieses ist von Bedeutung, da die Ansaugöffnungen, welche in den Endteilen 221 vorgesehen sind unterschiedlich ausgebildet sind. Die Ansaugöffnung des einen Endteils hat einen größeren Querschnitt als die Ansaugöffnung des anderen Endteils. Der Querschnitt der Ansaugöffnung hat einen Einfluss auf den Volumenstrom, der über die Abschnitte 220, 221, 223, 224 der Milchleitungen gefördert werden kann. Je nach dem wie die Milch in dem Gerät verwendet werden soll, ist eine größere Milchmenge notwendig. Die Menge der aus dem Milchbehälter 2 angesaugten Milch wird somit zum Teil auch über die Wahl des Querschnitts der Ansaugöffnung in den Endteilen 221 bestimmt.

Das Kupplungsstück 220 dient der Verbindung der Abschnitte 220, 221, 223, 224 der Milchleitungen im Deckel 22 mit weiterführenden Abschnitten der Milchleitungen im Gerät. Von diesen weiterführenden Abschnitten ist lediglich ein zum Kupplungsmittel 220 komplementäres Kupplungsmittel 72 dargestellt (Fig. 9 bis 11).

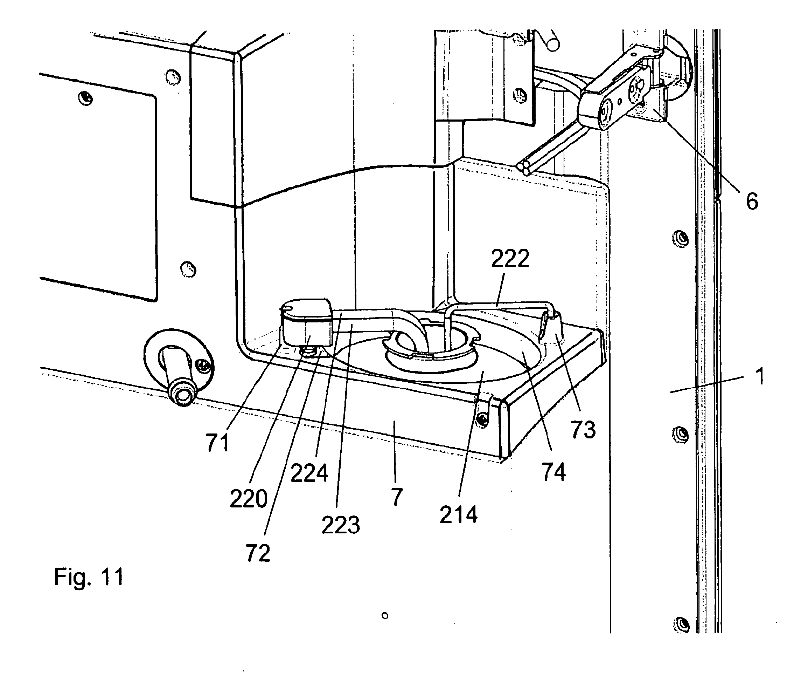

Im Deckel 22 des Milchbehälters 2 ist ein Sensorstab 222 eines als kapazitiver Füllstandssensor ausgebildeten Sensors angeordnet (Fig. 11). Der Sensorstab 222 ist ebenfalls L-förmig gebogen, wobei der längere Schenkel parallel zu den längeren Schenkeln der Rohre 223, 224 in das Isoliergefäß 21 hineinragt. Der kürzere Schenkel liegt mit den kürzeren Schenkeln der Rohre 223, 224 in etwa in einer Ebene, läuft jedoch in die entgegengesetzte Richtung. Das Ende des kürzeren Schenkels des Sensorstabes 222 ist rechtwinklig nach unten abgekröpft. Das abgekröpfte Ende hat die Form eines Bolzens und dieser dient der Verbindung des Sensorstabes 222 mit einer nicht dargestellten Sensorleitung im Gerät, wozu am Aufnahmeteil 7 des Geräts eine Buchse 73 zur Kupplung des Sensorstabs 222 und der Sensorleitung vorgesehen ist. Die Buchse 73 liegt auf der gegenüberliegenden Seite des geräteseitigen Kupplungsmittels 72 der Milchleitungen. Dadurch ist eine Entkopplung der elektrischen Signale, die über die Sensorleitungen beziehungsweise den Sensorstab 222 geführt werden, und der Flüssigkeit, die durch die Milchleitungen geführt wird, gewährleistet.

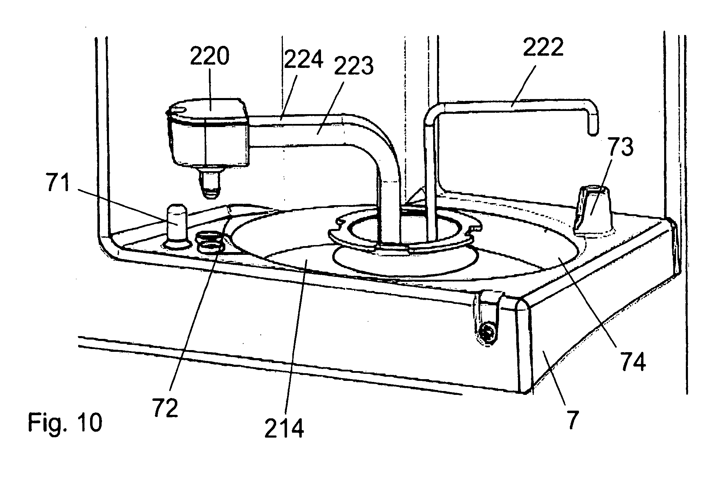

Im Bereich des geräteseitigen Kupplungsmittels 72 ist ein Positionierdorn 71 vorgesehen, der in eine komplementäre Positionierbuchse im Deckel 22 eingreift. Diese Positionierbuchse ist zum Teil durch das deckelseitige Kupplungsmittel 220 gebildet (Fig. 10, Fig. 11).

Die Aufnahmeausnehmung 74 für den Milchbehälter 2 im Aufnahmeteil 7 der Tür 1 ist so ausgerichtet, dass der Milchbehälter 2 aufgrund seiner Schwerkraft in der Aufnahmeausnehmung 74 gehalten wird. Zugleich gewährleistet die Schwerkraft, dass die Abschnitte 220, 221, 223 und 224 der Milchleitungen im Milchbehälter 2 und der Sensorstab 222 automatisch mit den Milchleitungen beziehungsweise Sensorleitungen im Gerät gekoppelt wird. Das Einsetzen des Milchbehälters 2 ist aufgrund seiner ovalen Querschnittsform des Außengehäuses 214 und des dementsprechenden lichten Querschnitts der Aufnahmeausnehmung 74 und aufgrund des Positionierdorns 71 und der Buchse 73 immer nur so möglich, da ein korrektes Einsetzen des Milchbehälters 2 in die Aufnahmeausnehmung 74 gewährleistet ist. Sofern das untere Ende des Milchbehälters 2 in die Aufnahmeausnehmung 74 mit der richtigen Orientierung eingesetzt ist, rutschen zur Verbindung der Abschnitte der Milchleitungen Stutzen an dem Kupplungsmittel 220 automatisch in Buchsen des Kupplungsmittels 72 einerseits und zur Verbindung des Sensorstabs 222 mit der Sensorleitung der Bolzen des Sensorstabs 222 in die Buchse 73 andererseits.

Zumindest eines der Kupplungsmittel 220, 72 ist weichelastisch ausgeführt, vorzugsweise die Stutzen 220 des milchbehälterseitigen Kupplungsmittels 220, so dass eine dichte Verbindung der Abschnitte der Milchleitungen möglich ist, über welche die Milch aus dem Milchbehälter 2 angesaugt werden kann.

Die Kupplungen zwischen den geräteseitigen und milchbehälterseitigen Abschnitten der Milchleitungen und dem Sensorstab 222 und der Buchse 73 werden somit ohne weitere Handgriffe beim Einsetzen des Milchbehälters 2 in die Aufnahmeausnehmung 74 hergestellt.

## Patentansprüche

1. Getränkebereiter zur Zubereitung von Getränken, z. B. Kaffeeautomat, mit einem Gerät, mit einem Behälter (2) und zumindest einer Leitung zum Ansaugen einer Flüssigkeit aus dem Behälter (2) in das Gerät, wobei die Leitung zumindest aus einem Abschnitt (220, 221, 223, 224) der Leitung im Behälter (2) und einem Abschnitt der Leitung im Gerät besteht und wobei der Getränkebereiter geeignet und eingerichtet ist, dass der Behälter (2) in dem Gerät eingesetzt und aus diesem entnommen werden kann, wobei der Behälter (2) einen Sensor zum Messen eines Füllstands der Flüssigkeit in dem Behälter (2) aufweist und der Getränkebereiter zur automatischen Kupplung des Abschnitts (220, 221, 223, 224) der Leitung im Behälter (2) mit dem Abschnitt (72) der Leitung im Gerät ausgebildet ist,
**dadurch gekennzeichnet, dass**
der Sensor einen Sensorstab (222) umfasst, der in den Behälter (2) hineinreicht und zur automatischen Kupplung des Sensors mit einer Sensorleitung im Gerät beim Einsetzen des Behälters (2) in das Gerät geeignet und eingerichtet ist, wobei die Kupplung der Abschnitte der Leitungen einerseits und die Kupplung des Sensors mit der Sensorleitung andererseits räumlich getrennt von einander erfolgt.

2. Getränkebereiter nach Anspruch 1, **dadurch gekennzeichnet, dass** der Behälter (2) einen Deckel (22) umfasst und dass der Deckel (22) den Sensorstab (222) umfasst.

3. Getränkebereiter nach Anspruch 2, **dadurch gekennzeichnet, dass** an dem Deckel (2) zumindest ein Abschnitt (220, 221, 223, 224) der Leitungen angebracht sind.

4. Getränkebereiter nach einem der Ansprüche 1 bis 3, **dadurch gekennzeichnet, dass** der Getränkebereiter ein Aufnahmeteil (7) umfasst, in welches der Behälter (2) zum Entnehmen geeignet und eingerichtet eingesetzt ist.

5. Getränkebereiter nach Anspruch 4, **dadurch gekennzeichnet, dass** ein Abschnitt (220, 221, 223, 224) einer Leitung im Deckel (22) und der Sensorstab (222) mit einem Abschnitt einer Leitung bzw. einer Sensorleitung am Aufnahmeteil (7) gekuppelt sind.

6. Getränkebereiter nach Anspruch 5, **dadurch gekennzeichnet, dass** die Kupplung des Abschnitts (220, 221, 223, 224) der Leitung im Deckel (22) mit dem Abschnitt der Leitung im Aufnahmeteil (7) einerseits und die Kupplung des Sensorstabs (222) mit der Sensorleitung andererseits räumlich getrennt von einander erfolgt.

7. Getränkebereiter nach Anspruch 6, **dadurch gekennzeichnet, dass** die Kupplung an einander gegenüberliegenden Seiten des Deckels (22) bzw. des Aufnahmeteils (7) erfolgt.

8. Getränkebereiter nach Anspruch 6 oder 7, **dadurch gekennzeichnet, dass** die Kupplung an einander gegenüberliegenden Seiten einer Aufnahmeausnehmung (74) in dem Aufnahmeteil (7) erfolgt.

## Claims

1. Beverage preparation means for preparing beverages, for example a coffee machine, comprising a device, comprising a container (2) and at least one line for suctioning a liquid from the container (2) into the device, the line being composed of at least a portion (220, 221, 223, 224) of the line in the container (2) and a portion of the line in the device and the beverage preparation means being suitable and equipped for the container (2) to be introduced into and removed from the device, the container (2) having a sensor for measuring the level of the liquid in the container (2) and the beverage preparation means being configured so as to couple the portion (220, 221, 223, 224) of the line in the container (2) to the portion (72) of the line in the device automatically,
**characterised in that**
the sensor comprises a sensor rod (222) which extends into the container (2) and which is suitable and equipped for automatically coupling the sensor to a sensor line in the device when the container (2) is introduced into the device, the portions of the line on the one hand and the sensor and the sensor line on the other being coupled in a spatially separated manner.

2. Beverage preparation means according to claim 1, **characterised in that** the container (2) comprises a lid (22), and **in that** the lid (22) comprises the sensor rod (222).

3. Beverage preparation means according to claim 2, **characterised in that** at least one portion (220, 221, 223, 224) of the lines is attached to the lid (2).

4. Beverage preparation means according to any one of claims 1 to 3, **characterised in that** the beverage preparation means comprises a receiving part (7) into which the container (2) is introduced in a manner suitable and equipped for being removed.

5. Beverage preparation means according to claim 4, **characterised in that** a portion (220, 221, 223, 224) of a line in the lid (22) and the sensor rod (222) are coupled to a portion of a line or a sensor line on the receiving part (7).

6. Beverage preparation means according to claim 5, **characterised in that** the portion (220, 221, 223, 224) of the line in the lid (22) and the portion of the line in the receiving part (7) on the one hand and the sensor rod (222) and the sensor line on the other are coupled in a spatially separated manner.

7. Beverage preparation means according to claim 6, **characterised in that** coupling takes place on mutually opposed sides of the lid (22) or the receiving part (7).

8. Beverage preparation means according to either claim 6 or claim 7, **characterised in that** coupling takes place on mutually opposed sides of a receiving opening (74) in the receiving part (7).

## Revendications

1. Préparateur de boissons pour la préparation de boissons, par ex. cafetière automatique, avec un appareil, avec un réservoir (2) et au moins une conduite pour aspirer dans l'appareil un liquide à partir du réservoir (2), la conduite se composant au moins d'un tronçon (220, 221, 223, 224) de la conduite dans le réservoir (2) et d'un tronçon de la conduite dans l'appareil, et le préparateur de boissons étant approprié et agencé pour que le réservoir (2) puisse être inséré dans l'appareil et retiré de ce dernier, le réservoir (2) présentant un capteur pour mesurer un niveau du liquide dans le réservoir (2), et le préparateur de boissons étant constitué pour l'accouplement automatique du tronçon (220, 221, 223, 224) de la conduite dans le réservoir (2) avec le tronçon (72) de la conduite dans l'appareil,
**caractérisé en ce que**
le capteur comprend une tige de capteur (222) qui pénètre dans le réservoir (2) et qui est appropriée et agencée pour l'accouplement automatique du capteur avec une ligne de capteur dans l'appareil lors de la mise en place du réservoir (2) dans l'appareil, l'accouplement des tronçons des conduites d'une part et l'accouplement du capteur avec la ligne de capteur d'autre part s'effectuant séparément l'un de l'autre dans l'espace.

2. Préparateur de boissons selon la revendication 1, **caractérisé en ce que** le réservoir (2) comprend un couvercle (22), et **en ce que** le couvercle (22) comprend la tige de capteur (222).

3. Préparateur de boissons selon la revendication 2, **caractérisé en ce qu'**au moins un tronçon (220, 221, 223, 224) des conduites est mis en place sur le réservoir (2).

4. Préparateur de boissons selon une des revendications 1 à 3, **caractérisé en ce que** le préparateur de boissons comprend une partie de logement (7) dans laquelle le réservoir (2) est inséré de façon appropriée et agencée pour l'enlèvement.

5. Préparateur de boissons selon la revendication 4, **caractérisé en ce qu'**un tronçon (220, 221, 223, 224) d'une conduite dans le couvercle (22) et la tige de capteur (222) sont couplés à un tronçon d'une conduite ou d'une ligne de capteur sur la partie de logement (7).

6. Préparateur de boissons selon la revendication 5, **caractérisé en ce que** l'accouplement du tronçon (220, 221, 223, 224) de la conduite dans le couvercle (22) avec le tronçon de la conduite dans la partie de logement (7) d'une part, et l'accouplement de la tige de capteur (222) avec la ligne de capteur d'autre part s'effectuent de façon séparée l'une de l'autre dans l'espace.

7. Préparateur de boissons selon la revendication 6, **caractérisé en ce que** l'accouplement s'effectue sur des côtés réciproquement opposés du couvercle (22) ou de la partie de logement (7).

8. Préparateur de boissons selon la revendication 6 ou 7, **caractérisé en ce que** l'accouplement s'effectue sur des côtés réciproquement opposés d'un creux de réception (74) dans la partie de logement (7).
